# EUROPÄISCHE PATENTSCHRIFT

(11) **EP 1 321 319 B1**
(45) Veröffentlichungstag und Bekanntmachung des Hinweises auf die Patenterteilung: **01.03.2006**
(21) Anmeldenummer: 01130639.6
(22) Anmeldetag: 21.12.2001
(51) Int. Cl.: B60G 13/00, B60G 15/06

(54) **Federbeinstützlager**
Strut support bearing
Palier supportant la jambe de suspension

(43) Veröffentlichungstag der Anmeldung: 25.06.2003
(73) Patentinhaber: ContiTech Vibration Control GmbH, 30165 Hannover (DE)
(72) Erfinder: Eberhard, Günter, Dr., 30989 Gehrden (DE); Kraft, Wolfgang, 30823 Garbsen (DE); Klettke, Michael, 30171 Hannover (DE); Richter, Matthias, Dr., 31700 Heuerssen (DE)
(74) Vertreter: Patentanwälte Thömen & Körner

(56) Entgegenhaltungen:
- WO-A-89/05242
- DE-A- 4 331 585
- US-A- 5 362 035
- US-A- 5 454 585
- US-A- 5 577 716
- US-A- 6 155 543
- US-B1- 6 267 512
- PATENT ABSTRACTS OF JAPAN vol. 2000, no. 21, 3. August 2001 (2001-08-03) & JP 2001 099218 A (BRIDGESTONE CORP), 10. April 2001 (2001-04-10)
- PATENT ABSTRACTS OF JAPAN vol. 1997, no. 05, 30. Mai 1997 (1997-05-30) & JP 09 014327 A (TOKAI RUBBER IND LTD), 14. Januar 1997 (1997-01-14)

## Beschreibung

Die Erfindung betrifft ein Federbeinstützlager gemäß dem Oberbegriff des Patentanspruchs 1.

Solche Federbeinstützlager haben den Zweck, die an der Hinterachse und an der Vorderachse eines Kraftfahrzeuges angeordneten Federn gegen die Karosserie des Kraftfahrzeuges und auch gegen die Stoßdämpfer abzustützen. Dabei sind die Federbeinstützlager zum einen mit der Karosserie des Kraftfahrzeuges und zum anderen mit dem jeweiligen Stoßdämpfer fest verbunden.

Die Aufgabe der Federbeinstützlager besteht im Wesentlichen darin, eine direkte Geräuschübertragung von der Primärfederung (Federdämpfelement oder Federbein) an die Karosserie zu unterdrücken bzw. zu vermindern. Außerdem lassen sich mit einem Federbeinstützlager auch Toleranzen der einzelnen Federn ausgleichen, die üblicherweise als Schraubenfedern ausgebildet sind.

Die bekannten Federbeinstützlager besitzen einen aus einem elastomerem Material, z. B. Gummi, bestehenden Grundkörper, in welchem ein metallenes Befestigungsteil einvulkanisiert und integriert ist, welches Befestigungselemente aufweist, mit denen das Federbeinstützlager fest mit der Karosserie des Kraftfahrzeuges verbunden werden kann. Außerdem befinden sich bei den bekannten Federbeinstützlagern in einer den Grundkörper des Federbeinstützlagers durchdringenden Öffnung zwei im Querschnitt U-förmig ausgebildete Metallteile, nämlich ein oberes Metallteil und ein unteres Metallteil.

Diese Metallteile umgreifen den Grundkörper oben und unten in Form eines waagerecht verlaufenden Kragens in der Weise, dass zwischen dem jeweiligen Kragen und dem benachbarten waagerecht verlaufenden Teil des Grundkörpers ein geringer Abstand besteht. Wenn sich die Metallteile durch Krafteinwirkung nach oben oder unten bewegen, wird dieser freie Abstand überwunden, und die Kragen der beiden Metallteile liegen dann oben oder unten an dem Grundkörper an. Somit bilden die Kragen der beiden Metallteile einen Anschlag.

Beide jeweils einen Anschlag bildenden Metallteile weisen mittig eine Bohrung auf, welche dazu dient, die beiden Metallteile und somit das Federbeinstützlager mit dem zugeordneten Stoßdämpfer zu verschrauben und somit fest zu verbinden. Ein derartiges Federbeinstützlager ist beispielsweise aus der Druckschrift US 6 267 512 B1 bekannt.

Wegen des erwähnten freien Abstandes zwischen den Kragen der beiden Metallteile und dem Grundkörper kommt dieser erst dann zum Anschlag mit den Kragen, wenn der freie Abstand überwunden ist, und erst dann wirkt der Stoßdämpfer. In diesem Bereich ist der Stoßdämpfer somit akustisch vom Kraftfahrzeug abgekoppelt.

In der Praxis hat sich das bekannte Federbeinstützlager zwar durchaus bewährt, allerdings besteht ein Nachteil darin, dass die Fertigung und Herstellung sehr kostenintensiv ist Die beiden als oberer und unterer Anschlag ausgebildeten Metallteile bestehen aus Stahlblech und unterliegen einer hohen Anforderung an ihre Festigkeit bzw. an ihre Eigenschaft, die bei Krafteinwirkung auftretenden Kräfte zu übertragen. Dementsprechend ist die Herstellung dieser Metallteile mit vergleichsweise hohen Kosten verbunden.

Auch die Fertigung der bekannten Federbeinstützlager ist als aufwendig zu betrachten. Bei der Herstellung eines Federbeinstützlagers müssen die beiden als Anschläge dienenden Metallteile einmal von der oberen und einmal von der unteren Seite des Federbeinstützlagers in die Öffnung des Grundkörpers eingefügt werden, und außerdem müssen diese beiden Metallteile auch noch miteinander verbunden werden, bis die Befestigung mit dem Stoßdämpfer erfolgt. Erst wenn das Federbeinstützlager mit dem Stoßdämpfer bzw. mit den beiden Metallteilen verschraubt ist, kann diese Schraubverbindung den Zusammenhalt der beiden Metallteile miteinander übernehmen.

Aus der US 5 362 035 ist ein Federbeinstützlager bekannt, bei dem die beiden Metallteile vorteilhaft einstückig in Form eines im Querschnitt U-förmig ausgebildeten Anschlagtopfes ausgestaltet sind, welcher an seiner oberen Seite einen waagerechten kreisförmigen Kragen besitzt. Hierbei bildet der Kragen des Anschlagtopfes einen ersten Anschlag und der Boden des Anschlagtopfes einen zweiten Anschlag. Ein derartiges Federbeinlager ist jedoch kompliziert aufgebaut und nur aufwendig herzustellen.

Der Erfindung liegt die Aufgabe zugrunde, ein Federbeinstützlager zu schaffen, welches sich mit verringertem Kostenaufwand herstellen lässt, ohne dass die bewährte Funktion der bekannten Federbeinstützlager beeinträchtigt wird.

Die Lösung dieser Aufgabe erfolgt durch die Merkmale des Patentanspruchs 1.

Bei der Erfindung ist in einer den Grundkörper des Federbeinstützlagers durchdringenden Öffnung ein im Querschnitt U-förmig ausgebildeter und als Anschlag dienender Anschlagtopf aus Metall vorgesehen, welcher an seiner oberen Seite einen waagerechten kreisförmig umlaufenden Kragen besitzt. Im Bereich dieses Kragens ist der Grundkörper hinterschnitten und besitzt eine kreisförmig umlaufende Nut mit einer oberen und einer unteren Wand. Der Kragen des Anschlagtopfes erstreckt sich in einem freien Abstand zur oberen und unteren Wand der Nut freibeweglich innerhalb der Nut. Wichtig ist es dabei, dass der die obere Wand der Nut bildende Wandteil des Grundkörpers fest an der Karosserie des Kraftfahrzeuges anliegt, wenn das Federbeinstützlager eingebaut und mit der Karosserie des Kraftfahrzeuges verschraubt ist In den Grundkörper des Federbeinstützlagers ist ein Befestigungsteil aus Metall einvulkanisiert und integriert, welches mit Befestigungsschrauben versehen ist, mit denen das Federbeinstützlager an der Karosserie des Kraftfahrzeuges verbunden wird.

Ein wesentlicher Vorteil der Erfindung besteht darin, dass für das Federbeinstützlager nur noch ein Metallteil als Anschlag benötigt wird, welcher durch den Anschlagtopf gebildet ist. Somit ist bei der Erfindung lediglich ein Metallteil als Anschlag erforderlich, wodurch die Kosten für das zweite Metallteil entfallen, und wodurch außerdem auch die Fertigung des Federbeinstützlagers wesentlich vereinfacht und verbilligt wird.

Ein grundlegender Gedanke der Erfindung besteht nämlich darin, die in jedem Fall vorhandene Karosserie des Kraftfahrzeuges praktisch als zweiten Anschlag zu benutzen, indem die obere Wand des die Nut in dem Grundkörper bildenden Wandteiles fest an der Karosserie des Kraftfahrzeuges anliegt.

Während bei den bekannten Federbeinstützlagern zwei als Anschläge dienende Metallteile mit ihren Kragen den Grundkörper übergreifen, sieht die Erfindung in Umkehrung dieses bekannten Prinzips vor, dass der Grundkörper selbst mit den beiden die kreisförmig umlaufende Nut bildenden Wandteile den Kragen des einzigen Anschlagtopfes oben und unten im Abstand übergreift. Dabei wird der nach wie vor erforderliche zweite Anschlag praktisch durch die Karosserie des Kraftfahrzeuges gebildet, indem die Karosserie fest an dem die obere Wand der Nut bildenden Wandteil des Grundkörpers anliegt.

Durch die nahezu völlige Einbettung des Befestigungsteiles im elastomeren Grundkörper ist gleichzeitig ein sehr guter Korrosionsschutz gegeben. Lediglich die Bereiche mit den Befestigungsschrauben sind frei vom elastomeren Grundkörper, um eine sichere Verschraubung mit der Karosserie des Kraftfahrzeuges zu gewährleisten.

Gemäß einer vorteilhaften Ausgestaltung der Erfindung besitzt der Anschlagtopf im Bereich des Bodens eine umlaufende Wulst, welche eine Durchmesservergrößerung bildet. Dadurch lässt sich eine gute und dauerhafte vertikale Positionierung des Anschlägtopfes in der Öffnung des Grundkörpers erzielen.

Mit Hilfe der Wulst wird das Federlieinstützlager im Bereich kleiner Schwingamplituden im Kräftegleichgewicht gehalten. Dies ermöglicht die Darstellung des Federbeinstützlagers mit einer reproduzierbaren und langzeitstabilen Kraft-Weg-Kennlinie entsprechend der Bauteilspezifikation.

Durch die Wulst wird verhindert, dass das Federbeinstützlager einem einseitigen Verlust der Vorspannung bzw. einer unzulässigen Verschiebung der Null-Lage (des Anschlagtopfes) der spezifizierten Steifigkeitskennung unterliegt. Die Stabilität dieser Null-Lage des Anschlagtopfes ist zur Sicherstellung der akustisch bestmöglichen Abkopplung des Stoßdämpfers vom Kraftfahrzeug für kleine Schwingwege bzw. Schwingamplituden notwendig.

Eine andere zweckmäßige Ausgestaltung der Erfindung besteht darin, dass die obere Wand und/oder die untere Wand der Nut des Grundkörpers auf ihrer der Nut zugewandten Seite nicht eben, sondern mit Stegen, Noppen oder ähnlichen geometrischen Elementen versehen ist. Durch diese Maßnahme ist es möglich, den Steifigkeitsübergang vom elastomeren Grundkörper zum anliegenden Kragen des Anschlagtopfes den jeweiligen Erfordernissen anzupassen.

Anhand des in der Zeichnung dargestellten Ausführungsbeispiels wird die Erfindung nachfolgend näher erläutert. Es zeigen:
- Fig. 1: eine Querschnittsansicht eines erfindungsgemäßen Federbeinstützlagers, und
- Fig. 2: eine perspektivische Darstellung des Federbeinstützlagers gemäß Fig. 1.

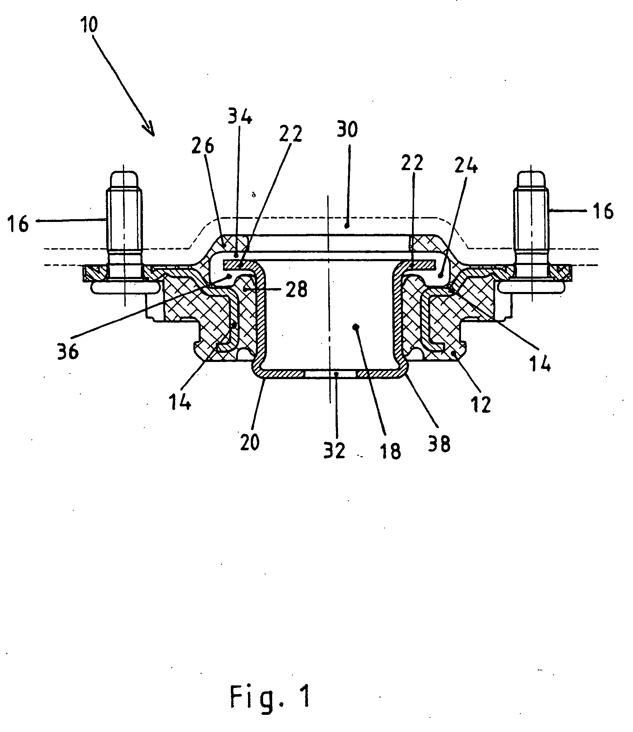

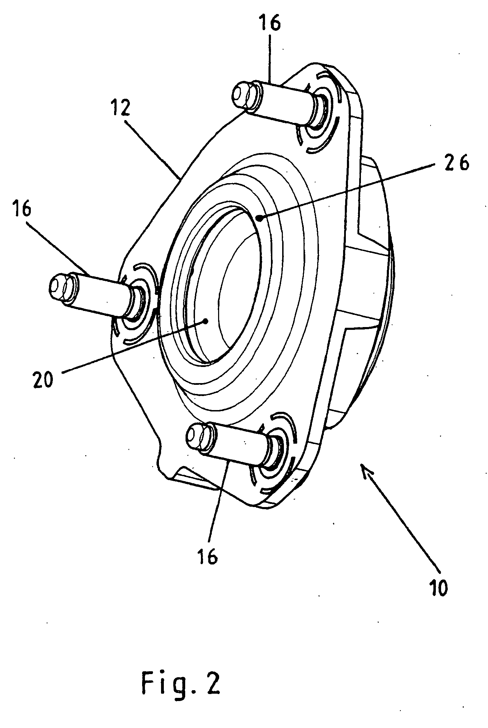

Das in Fig. 1 und 2 als Ganzes mit der Bezugsziffer 10 bezeichnete Federbeinstützlager umfasst einen Grundkörper 12 aus einem elastomerem Material, z. B. Gummi. In den Grundkörper 12 des Federbeinstützlagers 10 ist ein ringförmiges Befestigungsteil 14 einvulkanisiert und integriert, welches am äußeren Rand des dreieckförmig ausgebildeten Federbeinstützlagers 10 drei Befestigungsschrauben 16 besitzt. Diese Befestigungsschrauben 16 dienen dazu, das Federbeinstützlager 10 an einer in unterbrochenen Linien gezeigten Karosserie 30 eines nicht dargestellten Kraftfahrzeuges zu befestigen.

Der Grundkörper 12 besitzt eine Öffnung 18, in welcher ein U-förmig ausgebildeter runder Anschlagtopf 20 aus Metall angeordnet ist, welcher als Anschlag dient. An seinem oberen Ende sind die senkrechten Wände des Anschlagtopfes 20 umgebogen, wodurch ein waagerechter kreisförmig umlaufender Kragen 22 gebildet wird.

Im Bereich des Kragens 22 ist der Grundkörper 12 an seiner oberen Seite hinterschnitten, wodurch eine kreisförmig umlaufende Nut 24 gebildet ist, die durch eine obere Wand 26 und eine untere Wand 28 begrenzt wird. Innerhalb dieser Nut befindet sich der Kragen 22, wobei zur oberen Wand 26 ein freier oberer Abstand 34 und zur unteren Wand 28 ein freier unterer Abstand 36 besteht.

Im Boden des Anschlagtopfes 20 befindet sich eine Bohrung 32, welche dazu dient, einen in der Zeichnung nicht dargestellten Stoßdämpfer eines Kraftfahrzeuges mit dem Anschlagtopf 20 und somit auch mit dem Federbeinstützlager 10 fest zu verschrauben und zu verbinden.

Wie die Querschnittsansicht gemäß Fig. 1 verdeutlicht, kann der Kragen 22 des Anschlagtopfes 20 je nach Richtung einer einwirkenden Kraft entweder gegen die obere Wand 26 oder die untere Wand 28 zum Anschlag kommen, wenn die freien Abstände 34 bzw. 36 innerhalb der Nut 24 überwunden sind.

Wie Fig. 1 zeigt, wird das Federbeinstützlager 10 mittels der Befestigungsschrauben 16 mit der Karosserie 30 eines nicht dargestellten Kraftfahrzeuges verbunden, wobei die Karoserie 30 fest an der oberen Wand 26 des Grundkörpers 12 anliegt. Wenn der Kragen 22 des Anschlagtopfes 20 durch Krafteinwirkung auf den Anschlagtopf 20 gegen die obere Wand 26 des Grundkörpers 12 stößt, dient somit die Karosserie 30 als ein Anschlag. Dabei wirkt der Grundkörper 12 bzw. die obere Wand 26 praktisch als eine zwischengeschaltete Feder, da der Grundkörper 12 aus einem elastomerem Material besteht. Die Karosserie 30 wird bei der Erfindung als eine Gegenfläche herangezogen und verwendet, um einen Anschlag zu bilden. Deshalb wird für das Federbeinstützlager 10 selbst als zweiter Anschlag nur noch ein Metallteil benötigt, nämlich der Anschlagtopf 20.

Wie in Fig. 2 zu erkennen ist, ist das Federbeinstützlager 10 dreieckförmig ausgebildet, und die den Grundkörper 12 durchdringende Öffnung 18 ist mittig angeordnet. Das Federbeinstützlager kann aber auch in jeder anderen, an die Belange des Kraftfahrzeuges angepassten Form ausgestaltet sein, und die erwähnte Öffnung 18 kann auch exzentrisch angeordnet werden.

Der Anschlagtopf 20 ist ohne eine feste Gummi-Metall-Bindung in der Öffnung 18 montiert und besitzt in seiner Null-Lage die in Fig. 1 gezeigte Position. Die Montage und der Sitz des Anschlagtopfes 20 innerhalb der Öffnung 18 des Grundkörpers 12 wird durch die Elastizität der oberen Wand 26 möglich. Bei dieser Anordnung des Anschlagtopfes 20 bewegt sich der zylindrische Teil des Anschlagtopfes 20 bei Krafteinwirkung nicht relativ zum elastomeren Grundkörper 12. Vielmehr findet bei Krafteinwirkung auf den Anschlagtopf 20 eine elastomere Verformung des Grundkörpers 12 statt.

In Fig. 2 ist die Karosserie gemäß Fig. 1 aus Gründen der besseren Übersichtlichkeit nicht mit dargestellt.

### Bezugszeichenliste

### (ist Bestandteil der Beschreibung)

- 10: Federbeinstützlager
- 12: Grundkörper
- 14: Befestigungsteil
- 16: Befestigungsschrauben
- 18: Öffnung
- 20: Anschlagtopf
- 22: Kragen
- 24: Nut
- 26: obere Wand
- 28: untere Wand
- 30: Karosserie
- 32: Bohrung
- 34: oberer Abstand
- 36: unterer Abstand
- 38: Wulst

## Patentansprüche

1. Federbeinstützlager (10), welches bei Kraftfahrzeugen zwischen der Karosserie (30) des Kraftfahrzeuges und den bei dem Kraftfahrzeug üblichen Federn der Vorder- und/oder Hinterachse angeordnet ist, und welches mit der Karosserie (30) und dem an der betreffenden Achse befindlichen Stoßdämpfer des Kraftfahrzeuges verbunden ist, wobei das Federbeinstützlager (10) einen aus elastomerem Material bestehenden Grundkörper (12) besitzt, welcher bei Krafteinwirkung auf das Federbeinstützlager (10) nach Überwindung eines freien Abstandes (34, 36) gegen einen oberen oder unteren Anschlag stößt, wobei in einer den Grundkörper (12) durchdringenden Öffnung (18) ein im Querschnitt U-förmig ausgebildeter und als Anschlag dienender Anschlagtopf (20) aus Metall angeordnet ist, welcher an seiner oberen Seite einen waagerechten kreisförmig umlaufenden Kragen (22) besitzt, und wobei der Stoßdämpfer des Federbeins an dem Anschlagtopf (20) anbringbar ist, **dadurch gekennzeichnet, dass** der Grundkörper (12) im Bereich des Kragens (22) eine kreisförmig umlaufende Nut (24) mit einer oberen (26) und unteren Wand (28) aufweist, dass der Kragen (22) sich im Abstand (34, 36) zur oberen und unteren Wand (26, 28) innerhalb der Nut (24) frei beweglich erstreckt, dass der die obere Wand (26) der Nut (24) bildende Wandteil des Grundkörpers (12) fest an der Karosserie des Kraftfahrzeuges anliegt, wenn das Federbeinstützlager (10) eingebaut und mit der Karosserie (30) des Kraftfahrzeuges verbunden ist, und dass in den Grundkörper (12) des Federbeinstützlagers (10) ein Befestigungsteil (14) aus Metall einvulkanisiert und integriert ist, welches mit Befestigungsschrauben (16) versehen ist, mit denen das Federbeinstützlager (10) an der Karosserie (30) des Kraftfahrzeuges verbunden wird.

2. Federbeinstützlager nach Anspruch 1, **dadurch gekennzeichnet, dass** der Anschlagtopf (20) im äußeren Bereich seines Bodens eine Durchmesservergrößerung in Form einer umlaufenden Wulst (38) aufweist.

3. Federbeinstützlager nach Anspruch 1, **dadurch gekennzeichnet, dass** die obere Wand (26) und/oder die untere Wand (28) auf ihrer der Nut (24) zugewandten Seite mit Stegen oder Noppen versehen sind.

## Claims

1. Strut support bearing (10) which is arranged in motor vehicles between the body (30) of the motor vehicle and the springs of the front and/or rear axle which are customary in the motor vehicle, and which is connected to the body (30) and to the shock absorber of the motor vehicle which is located on the relevant axle, wherein the strut support bearing (10) comprises a base body (12) made of elastomeric material which, under the effect of force on the strut support bearing (10), after overcoming a free spacing (34, 36), butts against an upper or lower stop, wherein a metal stop pot (20) which is U-shaped in cross section and serves as a stop is arranged in an opening (18) which passes through the base body (12), said stop pot having a horizontal circular peripheral collar (22) on its upper side, and wherein the shock absorber of the strut can be applied to the stop pot (20), **characterized in that** the base body (12), in the region of the collar (22), has a circular peripheral groove (24) with an upper wall (26) and a lower wall (28), **in that** the collar (22) extends in a freely movable manner within the groove (24) at a spacing (34, 36) from the upper and lower wall (26, 28), **in that** the wall part of the base body (12) which forms the upper wall (26) of the groove (24) bears permanently against the body of the motor vehicle when the strut support bearing (10) is installed and connected to the body (30) of the motor vehicle, and **in that** a metal fixing part (14) is vulcanized into and integrated in the base body (12) of the strut support bearing (10), said fixing part being provided with fixing screws (16), by means of which the strut support bearing (10) is connected to the body (30) of the motor vehicle.

2. Strut support bearing according to Claim 1, **characterized in that** the stop pot (20) has, in the outer region of its base, an increased diameter in the form of a peripheral bulge (38).

3. Strut support bearing according to Claim 1, **characterized in that** the upper wall (26) and/or the lower wall (28) are provided with webs or knobs on their side facing the groove (24).

## Revendications

1. Support de jambe de force à ressort (10) qui est disposé, dans un véhicule automobile, entre la carrosserie (30) de celui-ci et les ressorts habituels de l'essieu avant et/ou de l'essieu arrière et relié à la carrosserie (30), ainsi qu'à l'amortisseur situé sur l'essieu concerné, le support de jambe de force à ressort (10) possédant un corps de base (12) en une matière élastomère, qui heurte une butée supérieure ou inférieure après avoir dépassé un écart libre (34, 36) lorsqu'une force agit sur le support de jambe de force à ressort (10), dans une ouverture (18) traversant le corps de base (12) étant disposé un pot de butée (20) en métal servant de butée, dont la section transversale est en forme de U et qui possède sur son côté supérieur un collet circulaire périphérique (22), l'amortisseur de la jambe de force à ressort pouvant être fixé sur le pot de butée (20), **caractérisé en ce que** le corps de base (12) présente une rainure circulaire périphérique (24) avec une paroi supérieure (26) et une paroi inférieure (28) au niveau du collet (22), **en ce que** le collet (22) s'étend à l'intérieur de la rainure (24) de manière librement mobile avec un écart (34, 36) par rapport aux parois supérieure et inférieure (26, 28), **en ce que** la partie de la paroi du corps de base (12), qui forme la paroi supérieure (26) de la rainure 24, adhère fixement sur la carrosserie du véhicule automobile, une fois que le support de jambe de force à ressort (10) est monté et relié à la carrosserie (30) du véhicule automobile, et **en ce que**, dans le corps de base (12) du support de jambe de force à ressort (10), est intégrée et vulcanisée une pièce de fixation (14) en métal qui est pourvue de vis de fixation (16) au moyen desquelles le support de jambe de force à ressort (10) est relié à la carrosserie (30) du véhicule automobile.

2. Support de jambe de force à ressort selon la revendication 1, **caractérisé en ce que** le pot de butée (20) présente, au niveau de la zone extérieure de son fond, un agrandissement de diamètre en forme de bourrelet périphérique (38).

3. Support de jambe de force à ressort selon la revendication 1, **caractérisé en ce que** la paroi supérieure (26) et/ou la paroi inférieure (28) sont pourvues de nervures et ou de grosseurs sur leurs faces tournées vers la rainure (24).
